# NEUE EUROPÄISCHE PATENTSCHRIFT

(11) **EP 0 432 296 B2**
(45) Veröffentlichungstag und Bekanntmachung des Hinweises auf die Entscheidung über den Einspruch: **19.08.1998**
(45) Hinweis auf die Patenterteilung: 04.08.1993
(21) Anmeldenummer: 89122981.7
(22) Anmeldetag: 13.12.1989
(51) Int. Cl.: B27K 5/00, B44D 7/00, A01M 1/24

(54) **Verfahren und Vorrichtung zur Schädlingsvernichtung insbesondere bei der Konservierung von Objekten**
Process and apparatus for pest destruction, especially in the conservation of objects
Procédé et dispositif pour la destruction des parasites, en particulier pour la conservation d'objets

(43) Veröffentlichungstag der Anmeldung: 19.06.1991
(73) Patentinhaber: Von Rotberg, Hans-Werner, D-69115 Heidelberg (DE)
(72) Erfinder: Von Rotberg, Hans-Werner, D-69115 Heidelberg (DE)
(74) Vertreter: Naumann, Ulrich, Dr.-Ing.

(56) Entgegenhaltungen:
- DE-A- 3 338 958
- DE-A- 3 839 368
- DE-C- 550 315
- Holz als Roh- und Werkstoff, Heft 10, 1957, S. 406-410, H. Schmidt et al.
- Holzschutz ohne Gift? Holzschutz und Oberflächenbehandlung in der Praxis, P. Weissenfeld, Ökobuch-Verlag, Freiburg, 5. Auflage, 1985, S. 42
- Anzeiger für Schädlingskunde vereinigt mit Schädlingsbekämpfung, 34. Jahrgang, Okt. 1961, S. 145-149; G. Becker et al.
- Fachkunde für Schreiner, W. Nutsch, Europa Lehrmittel, Stuttgart 1980, S. 76-77
- Der Bau- und Möbelschreiner (BM) 12/1988, S. 53-55 mit Fortsetzung in BM 1/1989, S. 44-46
- Cargo Containers, Quarantine aspects and procedures, Australian Quarantine Service 1984, S. 44
- Technologie des Holzes und der Holzwerkstoffe, F. Kollmann, 2. Auflage, 1. Band, Springer Verlag Berlin, Heidelberg, New York 1982, S. 386-387
- Timber-Its structure properties and utilization, H.E. Desch, 6. Auflage, Londan, The Macmillan Press Ltd., 1981, S. 320
- Holztechnologie, 5/1984, S. 264, 267, 269; W. Unger
- Central patent index doc. abstract journal, Woche 8934, 18.10.89 Zusammenfassung Nr. 89-248833, Derwent Publ. Ltd. Armstrong et al.
- Mitteilungen der Deutschen Gesellschaft für Holzforschung, Heft Nr.57/1971, S.50-57

## Beschreibung

Die Erfindung betrifft ein Verfahren zur Vernichtung von Schädlingen in einem davon befallenen Objekt, außer Obst und Gemüse, bei dem man das Objekt umgeben von Luft in einen Temperaturbereich erwärmt, in dem ein organisches Leben der Schädlinge nicht möglich ist, und es über eine zur sicheren Abtötung der Schädlinge ausreichende Zeitspanne in diesem Temperaturbereich hält und dann abkühlen läßt und während der Temperaturbehandlung die relative Luftfeuchtigkeit kontrolliert.

Eine solches Verfahren ist in der U.S. Patentanmeldung Ser. No. 07/270 608 beschrieben. Es geht hier um eine Desinfektion von mit Schädlingen befallenem Obst oder Gemüse, bei der man das Obst oder Gemüse mit Heißluft erhitzt und dabei die relative Luftfeuchtigkeit kontrolliert, um einerseits ein Austrocknen des Obstes oder Gemüses, und andererseits eine die Produktqualität potentiell beeinträchtigende Kondensation von Wasser auf dem Obst oder Gemüse zu verhindern.

Es gibt verschiedene Verfahren zur Schädlingsbekämpfung an Objekten aus organischem Material, insbesondere Holz und Holzwerkstoffe, um die weitere Wertminderung oder Zerstörung des von Schädlingen - Pilzen, Schwämmen, Bakterien, Insekten - befallenen Objekts zu verhindern. Es werden zu diesem Zweck chemische Mittel, nämlich Fungizide, Bakterizide und Insektizide eingesetzt. Nachteilig dabei ist das Risiko möglicher gesundheitsschädlicher Nebenwirkungen und die Umweitbelastung. Auch ist es problematisch, den Erfolg der Behandlung zu garantieren, da dazu die Chemikalie an jeden Punkt des zu behandelnden Objekts kommen muß, was kaum zu kontrollieren ist.

In der Bautechnik ist eine Heißluftbehandlung zur Schädlingsbekämpfung in Dachstühlen, Holzbalkendecken, Fachwerkwänden usw. bekannt, bei der man erhitzte Luft unter Überdruck in das Gebäude einläßt und dieses auf eine Temperatur aufheizt, bei der die Holzschädlinge mit Sicherheit abgetötet werden, wenn eine bestimmte Einwirkungszeit eingehalten wird. Es sei auf die DIN 688 800 Holzschutz im Hochbau verwiesen. Mit der Heißluftbehandlung geht eine Austrocknung des befallenen Objekts einher, die bei der Bekämpfung von Pilzen oder Schwämmen insbesondere im Fall von Vernässungen erwünscht ist, um das Mycelwachstum zum Stillstand zu bringen und den Pilz abzutöten (vgl. DE-OS 33 38 958).

Die bekannte Heißluftbehandlung ist nicht geeignet für zur Konservierung kommende wertvolle und empfindliche Objekte, insbesondere Werke der bildenden Kunst und des Kunsthandwerks wie Möbel, Altäre, Plastiken, Bilderrahmen u. a. m. Bekanntlich sind für den Erhalt derartiger Objekte gleichbleibende Klimaverhältnisse von großer Bedeutung. Es sei auf die aufwendigen Klimaanlagen in Museen und Restaurierungswerkstätten verwiesen, mit denen die Raumtemperatur und Luftfeuchtigkeit im wesentlichen konstant gehalten wird. Die in der Bautechnik angewendete Heißluftbehandlung würde bei einem zu restaurierenden Objekt, z. B. einem antiken Möbelstück, wegen der damit einhergehenden Austrocknung gravierende Probleme mit sich bringen. Zu befürchten sind Rißbildungen im Holz, Verwerfungen innerhalb des Objekts, Abheben und Abblättern von Farbschichten, Kraquelierungen in Polituren, Versprödung und Lösen des Leims usw.

Aus dem Fachbuch H. E. Desch, Timber - Its structure properties and utilization, 6. Auflage, London, The Macmillan Press Ltd., 1981, Seite 320 und seiner Zitierung in dem Artikel Dr. Wibke Unger, Möglichkeiten zur Bekämpfung holzzerstörender Insekten durch physikalische Methoden, Fachzeitschrift Holztechnologie, 1984/5, Seiten 264, 267, 269 ist eine Wärmebehandlung von mit holzzerstörenden Schädlingen befallenen ortsveränderlichen Gegenständen, z. B. Möbeln, zur Abtötung der Schädlinge bekannt. Die Wärmebehandlung findet in Klimaschränken, Trockenschränken, Trocknungsanlagen sowie notfalls Backröhren und Saunaräumen statt. Für die Behandlung werden bestimmte Temperaturen, relative Luftfeuchtigkeiten und Einwirkungszeiten angegeben.

In dem Fachbuch Peter Weissenfeld, Holzschutz ohne Gift?, Holzschutz und Holzoberflächenbehandlung in der Praxis, Ökobuch-Verlag, Freiburg, 5. Auflage, 1985, Seite 42 ist eine Heimwerkermethode zur Bekämpfung von Schädlingen in einem davon befallenen Möbelstück beschrieben. Das Möbelstück wird in eine Saune gestellt und dort etwa vier Stunden lang einer Temperatur von 90 °C ausgesetzt. Dabei soll die Luftfeuchtigkeit durch ständige Aufgüsse möglichst hoch gehalten werden.

Aus der DE-A-33 38 958 ist ein Verfahren zur Bekämpfung und Abtötung von Pilzen und/oder Schwämmen an organischen Materialien bekannt, das in einer Erwärmung und Trocknung besteht.

Günther Becker und Irmgard Loebe berichten in ihrem Artikel Hitzeempfindlichkeit holzzerstörender Käferlarven, Anzeiger für Schädlingskunde vereinigt mit Schädlingsbekämpfung, 34. Jahrgang, Oktober 1961, Seite 145 bis 149 über Versuche zur thermischen Abtötung von Käferlarven, die in einem Klimaschrank bei einer konstanten relativen Luftfeuchtigkeit von 30 % durchgeführt wurden. Die Versuche hatten das Ziel, Betriebsparameter für die Heißluftbehandlung zur Schädlingsbekämpfung in Dachstühlen zu gewinnen.

Hans Schmidt und Anton Schneider berichten in ihrem Artikel Abtötende und vorbeugende Wirkung bei der Hausbockbekämpfung mit Heißluft, Fachzeitschrift Holz als Roh- und Werkstoff, Heft 10, 1957, Seiten 406 bis 410 über Abtötungsversuche an Hausbocklarven in einem Trockenofen ohne Beeinflussung der Luftfeuchtigkeit. Die Versuche dienen dazu, Betriebsparameter für die Heißluftbehandlung zur Hausbockbekämpfung in Gebäuden zu gewinnen.

Der in der Fachzeitschrift Der Bau- und Möbelschreiner BM 12/1988, Seiten 53 bis 55 mit Fortsetzung in BM 1/1989, Seiten 44 bis 46 erschienene Artikel Qualitätssicherung vor und während der technischen Schnittholztrocknung ist eine allgemeine Abhandlung dieses Gebiets. Es werden die Schwindung und Quellung des Holzes behandelt und die Zusammenhänge zwischen Klima und Holzgleichgewichtsfeuchte dargestellt.

Aus dem Lehrbuch Wolfgang Nutsch, Fachkunde für Schreiner, Europa Lehrmittel, Stuttgart 1980, Seite 76 und 77 ist es bei der künstlichen Holztrocknung bekannt, die Luftfeuchtigkeit, Temperatur und Luftbewegung so zu steuern, daß das zum Trocknen günstigste Klima erreicht wird.

Die Quarantänebestimmungen Cargo Containers Quarantine aspects and procedures, Australian Quarantine Service 1984, Deckblatt, Seiten 1 und 44 und das Formblatt 2/5.84 der Landwirtschaftsämter Baden-Württembergs für die Behandlung-Bestätigung betreffen eine Wärmesterilisation bzw. ein Darren von Holz, das für den Export nach Australien oder Neuseeland bestimmt ist. Das Holz wird bei hoher Temperatur radikal getrocknet und anschließend einer Feuchtigkeitsbehandlung ausgesetzt.

Die DE-C-550 315 beschreibt ein Verfahren zur Imprägnierung von Holz, bei dem das Holz bis zur beginnenden Zersetzung erhitzt und dabei sein Feuchtigkeitsgehalt nicht vermindert, sondern möglichst erhöht wird.

Dem Fachbuch Franz Kollmann, Technologie des Holzes und der Holzwerkstoffe, 2. Auflage, 1. Band, Springer-Verlag Berlin, Heidelberg, New York 1982, Seite 386 und 387 kann eine Kennlinienschar konstanter Holzfeuchtigkeit (hygroskopische Isothermenschar) für Fichtenholz entnommen werden.

Die nachveröffentlichte DE-A-38 39 368 des Anmelders gilt in der Bundesrepublik Deutschland als Stand der Tecknik. Aufgabe der Erfindung ist es, ein für die Gesundheit gänzlich unbedenkliches, umweltfreundliches Verfahren zur Vernichtung von Schädlingen, insbesondere Insekten, anzugeben, das bei der Konservierung empfindlicher Objekte ohne die Gefahr von Beeinträchtigungen zum Einsatz kommen kann und die nachweisliche Vernichtung sämtlicher Schädlinge garantiert. Desweiteren soll eine bedienungsfreundliche und vielfältig einsetzbare Vorrichtung zur Durchführung des Verfahrens geschaffen werden.

Diese Aufgabe wird dadurch gelöst, daß man während der Temperaturbehandlung den Feuchtigkeitsgehalt der Luft temperaturabhängig derart regelt, daß man die relative Luftfeuchtigkeit in der Erwärmungsphase erhöht und in der Abkühlungsphase absenkt und dabei einer Kennlinie (hygroskopische Isotherme) der konstanten Objektfeuchtigkeit, insbesondere Holzfeuchtigkeit, bei der jeweiligen Temperatur und Luftfeuchtigkeit folgt, so daß kein oder kein nennenswert veränderter Feuchtigkeitsaustausch zwischen dem Objekt und der Luft erfolgt. Man erreicht so, daß die Objektfeuchtigkeit - bei aus Holz bestehenden Objekten die Holzfeuchtigkeit - während der Temperaturbehandlung in guter Näherung konstant ist. Versuche haben ergeben, daß die Temperaturbehandlung unter diesen Bedingungen selbst bei beträchtlicher Aufheizung keine negativen Auswirkungen auf ein empfindliches, zur Konservierung kommendes Objekt hat, was dadurch zu erklären ist, daß über den auch unter Normalbedingungen stattfindenden Feuchtigkeitsaustausch mit der Luft hinaus keine Trocknung oder Befeuchtung des Objekts erfolgt. Letzteres kann über ausreichend lange Zeit in Temperaturbereiche aufgeheizt werden, in denen kein organisches Leben existiert, so daß die vollständige Abtötung aller Schädlinge gewährleistet ist. Da keine Chemikalien eingesetzt werden, ist das Verfahren gesundheitlich völlig unbedenklich und umweltfreundlich.

Eine im wesentlichen konstante Objektfeuchtigkeit kann unter Umständen bereits dadurch erreicht werden, daß man während der Temperaturbehandlung die relative Luftfeuchtigkeit konstant hält. Eine entsprechende Behandlung von Obst oder Gemüse ist vom Schutz angeschlossen.

Mit relativer Luftfeuchtigkeit wird bekanntlich der Sättigungsgrad der Luft mit Wasserdampf bezogen auf die maximale Feuchte bezeichnet, die Luft über einer Wasseroberfläche aufnehmen kann. Diese maximale Feuchte, bei der die Luft gesättigt ist, erhöht sich mit steigender Temperatur. Ohne Regelung der Luftfeuchtigkeit bei der Temperaturbehandlung würde die relative Luftfeuchtigkeit in der Phase der Erwärmung des Objekts stark abfallen und in der Phase der Abkühlung zwar ansteigen, aber wegen der zwischenzeitlichen Trocknung des Objekts das ursprüngliche Niveau nicht mehr erreichen.

Man erreicht im erfindungsgemäßer Weise eine im wesentlichen konstante Objektfeuchtigkeit, wenn man die relative Luftfeuchtigkeit in der Erwärmungsphase erhöht und in der Abkühlungsphase absenkt und dabei einer Kennlinie (hygroskopische Isotherme) der konstanten Objektfeuchtigkeit, insbesondere Holzfeuchtigkeit, bei der jeweiligen Temperatur und Luftfeuchtigkeit folgt.

Das Objekt wird vorzugsweise durch Beaufschlagung mit Heißluft erwärmt. Das ist für eine präzise Temperaturregelung günstig.

Vorzugsweise wird das Objekt über sein volles Volumen auf eine Endtemperatur von ca. 55 °C erwärmt und über ca. 60 Minuten bei dieser Endtemperatur gehalten. Das Objekt wird hierzu vorzugsweise Heißluft etwas höherer Temperatur, z. B. von 57 °C, ausgesetzt. Die thermische Behandlung des Objekts über 60 Minuten bei 55 °C garantiert eine vollständige Schädlingsvernichtung.

Das Erreichen der Endtemperatur kann durch eine Kerntemperaturmessung an dem Objekt kontrolliert und nachprüfbar aufgezeichnet werden, z.B. mit einem Schreiber.

Die Heißlufttemperatur wird vorzugsweise derart geregelt, daß sich ihre Temperaturdifferenz zu der gemessenen Kerntemperatur nicht auf mehr als einen vorgegebenen Betrag beläuft. Dadurch, daß die Temperatur der Prozeßluft in der Aufheizphase nur wenig über der gemessenen Kerntemperatur, und in der Abkühlungsphase nur wenig unter der gemessenen Kerntemperatur liegt, vermeidet man zu hohe Temperaturgradienten und thermische Spannungen in dem Objekt, das so sehr schonend behandelt wird.

Die Erwärmung des Objekts von der Raumtemperatur auf die Endtemperatur sollte stetig in einem Zeitraum von mehreren Stunden erfolgen, damit thermische Spannungen möglichst vermieden werden. Die erforderliche Zeit variiert nach Material und Größe des zu behandelnden Objekts, doch können fünf bis zwölf Stunden als Richtwert dienen. Die Abkühlung des Objekts von der Endtemperatur auf Raumtemperatur braucht einen vergleichbaren Zeitraum.

Als Vorrichtung zur Durchführung des Verfahrens ist eine Klimakammer mit einem elektrischen Heizaggregat, einem Gebläse, einer Temperaturregelung sowie einer Luftbefeuchtungseinrichtung geeignet, wobei letztere mit einer Meß- und Regeleinrichtung für die relative Luftfeuchtigkeit verbunden ist. Die an dem Heizaggregat erwärmte Luft wird durch das Gebläse in der Klimakammer zirkuliert. was für eine gleichmäßige Erwärmung des Objekts und eine präzise Temperaturregelung von Bedeutung ist.

Zu der Luftbefeuchtungseinrichtung kann ein beheizbares und vorzugsweise auch kühlbares Wasserbecken gehören, über das die Prozeßluft streicht. Aus dem Becken wird zur Erhöhung der relativen Luftfeuchtigkeit Wasser verdampft. In der Abkühlphase kann hingegen das gekühlte Becken als Kondensor dienen.

Zu der Luftbefeuchtungseinrichtung kann auch ein Ultraschallvernebler für Wasser gehören, mit dem eine sehr feine Verteilung des der Luft zuzusetzenden Wassers erreicht wird.

Die Vorrichtung kann einen Kondensor für Wasser und/oder eine absperrbare Durchtrittsöffnung für die Abgabe von Prozeßluft an die Umgebung aufweisen. Es hat sich als praktisch erwiesen, in der Abkühlphase die relative Luftfeuchtigkeit dadurch abzusenken, daß man einen Anteil der Prozeßluft geregelt in die Umgebung entläßt. Alternativ oder zusätzlich kann bei der Abkühlung des Objekts an einem Kondensor das überschüssige Wasser kondensiert werden.

Zur Vermeidung von Verunreinigungen wird destilliertes Wasser verdampft und/oder dispergiert, das einem Reservoir der Vorrichtung entnommen wird.

Für die schon erwähnte Kerntemperaturmessung können eine oder mehrere Sonden vorhanden sein, wobei sich eine Sonde als ausreichend erwiesen hat.

Die Klimakammer kann in nahezu beliebiger Größe fest installiert sein. Es ist aber auch ein mobiler Betrieb denkbar, bei dem eine komplette Klimakammer auf einem Fahrzeug, beispielsweise einem Lastkraftwagen, mitgeführt wird. Der Anwender des Verfahrens kann dann zu dem Privatbesitzer eines zu behandelnden Objekts oder einem Museum fahren, um an Ort und Stelle die Behandlung vorzunehmen. Schließlich ist auch an eine zerlegbare Klimakammer zu denken, die in Einzelteilen zu dem zu behandelnden Objekt gebracht und um dieses herum aufgebaut wird. Dieses Vorgehen empfiehlt sich für größere Objekte, die nicht bewegt werden können oder sollen, beispielsweise Altäre.

Die Erfindung wird im folgenden anhand dreier Beispiele näher erläutert.

### 1. Beispiel

Ein zur Konservierung kommender antiker Holzschrank ist von Nagekäfern (Anobien) befallen, deren Larven allgemein als Holzwurm bezeichnet werden. Der Schrank wird in eine Klimakammer gebracht, die im Atelier des Restaurators fest installiert ist. An den dicksten Holzteilen des Schranks wird eine Sonde zur Kerntemperaturmessung angebracht. Die Klimakammer wird geschlossen und ein darin befindliches elektrisch geheiztes Heißluftgebläse in Betrieb gesetzt, um den Schrank aufzuheizen. Die Temperatur der Heißluft beim Austritt aus dem Gebläse ist geregelt. Sie beträgt anfangs 24 °C und wird programmgesteuert angehoben, wobei die Temperaturdifferenz zu der gemessenen Kerntemperatur nicht mehr als 4 °C beträgt. Eine Meß- und Regeleinrichtung erfaßt die relative Luftfeuchtigkeit in der Klimakammer und steuert eine Luftbefeuchtungseinrichtung, die aus einer heizbaren und kühlbaren Wanne mit destilliertem Wasser besteht, über die die aus dem Gebläse kommende Heißluft streicht. Die relative Luftfeuchtigkeit wird in der Aufheizphase angehoben, wobei die Steuerung der Luftbefeuchtungseinrichtung einer Kennlinie konstanter Holzfeuchtigkeit bei der jeweiligen Temperatur und relativen Luftfeuchtigkeit folgt. In der Aufheizphase wird die Heißluft mit aus dem Becken verdampftem Wasser angereichert. Die Lufttemperatur, die Luftfeuchtigkeit und die mit der Sonde gemessene Kerntemperatur werden mit einem Mehrfachschreiber aufgezeichnet. Nach achtstündiger Aufheizung mißt die Sonde eine Kerntemperatur von 55 °C. Die Temperatur der Heißluft beträgt 57 °C. Die Heizleistung und die Luftbefeuchtungseinrichtung werden nun so geregelt, daß die Temperatur und Luftfeuchtigkeit der Prozeßluft im wesentlichen konstant bleiben, während die Kerntemperatur von 55 °C über eine Behandlungszeit von mindestens 60 Minuten gehalten wird. Dann schließt sich eine langsame Abkühlung an, während der die Temperatur der Heißluft im wesentlichen linear abgesenkt und die Heizung schließlich abgeschaltet wird. Die Temperaturdifferenz zu der gemessenen Kerntemperatur beträgt auch in dieser Phase maximal 4 °C. Die relative Luftfeuchtigkeit wird der Kennlinie konstanter Holzfeuchtigkeit folgend abgesenkt, wozu die Wanne mit destilliertem Wasser gekühlt und überdies Prozeßluft durch eine Öffnung an die Umgebung abgegeben wird, die sich mit einer gesteuerten Klappenanordnung wahlweise sperren und freigeben läßt. Nach achtstündiger Abkühlung beträgt die Lufttemperatur in der Klimakammer 22 °C, und es wird eine Kerntemperatur von 25 °C gemessen. Damit sind Bedingungen erreicht, unter denen der Schrank aus der Klimakammer geholt werden kann.

Da der ganze Schrankkörper über mindestens 60 Minuten auf mindestens 55 °C aufgeheizt wurde, sind die Anobien und ihre Larven und Eier mit Sicherheit abgetötet. Diese Tatsache und die schonende Behandlung des Schranks werden durch den aufgezeichneten Meßstreifen belegt.

### 2. Beispiel

Eine Klimakammer der vorbeschriebenen Art ist auf einem Lastkraftwagen installiert, mit dem der Anwender des Verfahrens bei privaten Eigentümern von zu behandelnden Objekten oder Museen ohne eigene Restaurierungsabteilung vorfährt. Die Objekte werden in die Klimakammer auf den Lastkraftwagen gebracht und dort wie in Beispiel 1 thermisch behandelt.

### 3. Beispiel

In einer Kirche wird um einen Altar aus einem Gerüst und Isolationsplatten eine Klimakammer aufgebaut, um den Altar wie in Beispiel 1 zu behandeln. Wegen der Größe des Objekts ist mit längeren Aufheiz- und Abkühlungszeiten zu rechnen.

## Patentansprüche

1. Verfahren zur Vernichtung von Schädlingen in einem davon befallenen Objekt außer Obst und Gemüse, bei dem man das Objekt umgeben von Luft in einen Temperaturbereich erwärmt, in dem ein organisches Leben der Schädlinge nicht möglich ist, und es über eine zur sicheren Abtötung der Schädlinge ausreichende Zeitspanne in diesem Temperaturbereich hält und dann abkühlen läßt und während der Temperaturbehandlung die relative Luftfeuchtigkeit kontrolliert,
**dadurch gekennzeichnet,** daß man während der Temperaturbehandlung den Feuchtigkeitsgehalt der Luft temperaturabhängig derart regelt, daß man die relative Luftfeuchtigkeit in der Erwärmungsphase erhöht und in der Abkühlungsphase absenkt und dabei einer Kennlinie (hygroskopische Isotherme) der konstanten Objektfeuchtigkeit, insbesondere Holzfeuchtigkeit, bei der jeweiligen Temperatur und Luftfeuchtigkeit folgt, so daß kein oder kein nennenswert veränderter Feuchtigkeitsaustausch zwischen dem Objekt und der Luft erfolgt.

2. Verfahren nach Anspruch 1, dadurch gekennzeichnet, daß man das Objekt durch Beaufschlagung mit Heißluft erwärmt.

3. Verfahren nach Anspruch 1 oder 2, dadurch gekennzeichnet, daß man das Objekt über sein volles Volumen auf eine Endtemperatur von ca. 55° C erwärmt und über 60 Minuten bei dieser Endtemperatur hält, wozu das Objekt vorzugsweise Heißluft etwas höherer Temperatur von z.B. 57 °C ausgesetzt wird.

4. Verfahren nach einem der Ansprüche 1 bis 3, dadurch gekennzeichnet, daß man das Erreichen der Endtemperatur durch eine Kerntemperaturmessung an dem Objekt kontrolliert.

5. Verfahren nach einem der Ansprüche 1 bis 4, dadurch gekennzeichnet, daß man die Heißlufttemperatur derart regelt, daß sich ihre Temperaturdifferenz zu der gemessenen Kerntemperatur auf nicht mehr als einen vorgegebenen Betrag beläuft.

6. Verfahren nach einem der Ansprüche 1 bis 5, dadurch gekennzeichnet, daß man die Erwärmung des Objekts von Raumtemperatur auf Endtemperatur und die Abkühlung von Endtemperatur auf Raumtemperatur stets über eine im wesentlichen gleiche Zeitspanne von fünf bis zwölf Stunden durchführt.

7. Vorrichtung zur Durchführung des Verfahrens nach einem der Ansprüche 1 bis 6, bestehend aus einer Klimakammer mit einem elektrischen Heizaggregat, einem Gebläse, einer Temperaturregelung sowie einer Luftbefeuchtungseinrichtung, die mit einer Meß- und Regeleinrichtung für die relative Luftfeuchtigkeit verbunden ist.

8. Vorrichtung nach Anspruch 7, dadurch gekennzeichnet, daß zu der Luftbefeuchtungseinrichtung ein beheizbares und vorzugsweise auch kühlbares Wasserbecken gehört, über das die Prozeßluft streicht.

9. Vorrichtung nach Anspruch 8, dadurch gekennzeichnet, daß zu der Luftbefeuchtungseinrichtung ein Ultraschallvernebler für Wasser gehört.

10. Vorrichtung nach einem der Ansprüche 7 bis 9, dadurch gekennzeichnet, daß sie einen Kondensor für Wasser und/oder eine absperrbare Durchtrittsöffnung für die Abgabe von Prozeßluft an die Umgebung aufweist.

11. Vorrichtung nach einem der Ansprüche 7 bis 10, dadurch gekennzeichnet, daß sie ein Reservoir für destilliertes Wasser enthält.

12. Vorrichtung nach einem der Ansprüche 7 bis 11, dadurch gekennzeichnet, daß sie wenigstens eine Sonde zur Kerntemperaturmessung aufweist.

13. Vorrichtung nach einem der Ansprüche 7 bis 12, dadurch gekennzeichnet, daß sie fest installiert ist.

14. Vorrichtung nach einem der Ansprüche 7 bis 12, dadurch gekennzeichnet, daß sie sich auf einem Fahrzeug befindet.

15. Vorrichtung nach einem der Ansprüche 7 bis 12, dadurch gekennzeichnet, daß sie in Einzelteile zerlegbar und ein zu behandelndes Objekt einschließend installierbar ist.

## Claims

1. Process for the destruction of infestations in an object thus affected with the exception of fruit and vegetables, wherein the object, surrounded by air, is heated to within a temperature range in which organic life of the infestations is not sustainable, is kept within this temperature range for a period of time sufficient to ensure reliable kill-off of the infestations, and is then allowed to cool, with the relative air humidity being controlled during the temperature treatment, characterised in that during the temperature treatment the air humidity is regulated as a function of temperature in such a way that the relative air humidity is increased in the heating phase and reduced in the cooling phase and in so doing a characteristic curve (hygroscopic isotherm) of constant object humidity, in particular timber humidity, is followed at the respective temperature and air humidity, so that change in the humidity exchange between the object and the air is nil or negligible.

2. Process according to Claim 1, characterised in that hot air impinges on the object in order to heat it.

3. Process according to Claim 1 or 2, characterised in that the object is heated throughout its volume to a final temperature of approx. 55°C and is kept at this final temperature for 60 minutes, for which purpose the object is preferably exposed to hot air at a slightly higher temperature, for example, 57°C.

4. Process according to one of Claims 1 to 3, characterised in that attainment of the final temperature is monitored by measuring the temperature at the core of the object.

5. Process according to one of Claims 1 to 4, characterised in that the hot air temperature is regulated in such a manner that the temperature difference between the latter and the measured core temperature does not exceed a predetermined amount.

6. Process according to one of Claims 1 to 5, characterised in that the object is heated from room temperature to the final temperature and is cooled from the final temperature to room temperature progressively over a period of time which is substantially the same, of from five to twelve hours.

7. Apparatus for carrying out the process according to one of Claims 1 to 6, comprising a climatic chamber having an electrical heating unit, a fan, temperature regulation and an air humidifying device which is connected to a device for measuring and regulating the relative air humidity.

8. Apparatus according to Claim 7, characterised in that there is associated with the air humidifying device a heatable and preferably also coolable water basin over which the process air passes.

9. Apparatus according to Claim 8, characterised in that there is associated with the air humidifying device an ultrasonic water atomizer.

10. Apparatus according to one of Claims 7 to 9, characterised in that it exhibits a condenser for water and/or an opening which can be shut off for discharge of process air into the environment.

11. Apparatus according to one of Claims 7 to 10, characterised in that it contains a reservoir for distilled water.

12. Apparatus according to one of Claims 7 to 11, characterised in that it exhibits at least one probe for measuring the core temperature.

13. Apparatus according to one of Claims 7 to 12, characterised in that it is a fixed installation.

14. Apparatus according to one of Claims 7 to 12, characterised in that it is located on a vehicle.

15. Apparatus according to one of Claims 7 to 12, characterised in that it is dismantlable into individual components and an object to be treated is installable in an enclosing manner.

## Revendications

1. Procédé de destruction de parasites dans un objet sauf fruits et légume en étant infesté, dans lequel on chauffe l'objet entouré d'air dans une plage de température dans laquelle toute vie organique des parasites est impossible et l'on maintient l'objet dans cette plage de température, pendant un intervalle de temps suffisant pour assurer la mort des parasites, puis on le laisse refroidir et l'on contrôle l'humidité relative pendant le traitement thermique, caractérisé en ce que, pendant le traitement thermique, on règle la teneur en humidité de l'air en fonction de la température, de telle façon que soit produite une augmentation de l'humidité relative de l'air dans la phase de réchauffement et une diminution dans la phase de refroidissement, et que l'on suive une caractéristique (isotherme hygroscopique) d'humidité constante de l'objet, en particulier d'humidité du bois, à la température spécifique et l'on suit l'humidité de l'air de façon que ne se produise aucune variation notable de l'échange de l'humidité entre l'objet et l'air.

2. Procédé selon la revendication 1, caractérisé en ce que l'on chauffe l'objet par exposition à de l'air chaud.

3. Procédé selon la revendication 1 ou 2, caractérisé en ce que l'on chauffe l'objet, dans la totalité de son volume, à une température finale d'environ 55° C, et on le maintient à cette température finale pendant plus de 60 minutes, à l'effet de quoi l'objet est exposé de préférence à de l'air chaud situé à une température un peu plus élevée, de par exemple 57° C.

4. Procédé selon l'une des revendications 1 à 3, caractérisé en ce que l'on contrôle l'atteinte de la température finale, au moyen d'une mesure de température opérée au coeur de l'objet.

5. Procédé selon l'une des revendications 1 à 4, caractérisé en ce que l'on règle la température de l'air chaud de telle façon que sa différence de température par rapport à la température à coeur mesurée ne dépasse pas une valeur prédéterminée.

6. Procédé selon l'une des revendications 1 à 5, caractérisé en ce que l'on effectue le chauffage de l'objet, depuis la température ambiante jusqu'à la température finale, et le refroidissement, de la température finale à la température ambiante, en opérant constamment sur un intervalle de temps sensiblement identique, valant de cinq à douze heures.

7. Dispositif de mise en oeuvre du procédé selon l'une des revendications 1 à 6, composé d'une chambre de climatisation équipée d'un groupe de chauffage électrique, d'une soufflante, d'une régulation de température, ainsi que d'un dispositif d'humidification de l'air, relié à un dispositif de mesure et de régulation pour l'humidité relative de l'air.

8. Dispositif selon la revendication 7, caractérisé en ce que fait partie du dispositif d'humidification de l'air un bassin d'eau susceptible d'être chauffé, de préférence également refroidi, sur lequel passe l'air de processus.

9. Dispositif selon la revendication 8, caractérisé en ce que fait partie du dispositif d'humidification de l'air un nébuliseur à ultrasons.

10. Dispositif selon l'une des revendications 7 à 9, caractérisé en ce qu'il présente un condenseur pour l'eau et/ou une ouverture de passage obturable, pour l'évacuation d'air de processus à l'environnement.

11. Dispositif selon l'une des revendications 7 à 10, caractérisé en ce qu'il contient un réservoir pour de l'eau distillée.

12. Dispositif selon l'une des revendications 7 à 11, caractérisé en ce qu'il présente au moins une sonde pour la mesure de la température à coeur.

13. Dispositif selon l'une des revendications 7 à 12, caractérisé en ce qu'il est installé à demeure.

14. Dispositif selon l'une des revendications 7 à 12, caractérisé en ce qu'il se trouve sur un véhicule.

15. Dispositif selon l'une des revendications 7 à 12, caractérisé en ce qu'il est décomposable en pièces individuelles et peut être installé en y incluant un objet à traiter.
